# EUROPÄISCHE PATENTANMELDUNG

(11) **EP 4 602 909 A1**
(43) Veröffentlichungstag der Anmeldung: **20.08.2025**
(21) Anmeldenummer: 25152197.7
(22) Anmeldetag: 16.01.2025
(51) Int. Cl.: A01F 15/14, A01F 15/08

(54) **LANDWIRTSCHAFTLICHE QUADERBALLENPRESSE ZUR VERARBEITUNG VON ERNTEGUT ZU QUADERFÖRMIGEN BALLEN**

(30) Priorität: 15.02.2024 DE 102024104194
(71) Anmelder: Usines CLAAS France S.A.S, 57140 St. Rémy / Woippy (FR)
(72) Erfinder: Rongvaux, Laurent, 54800 Tronville (FR); Grosnickel, Rémi, 57530 Colligny (FR)
(74) Vertreter: CLAAS Gruppe

(57) **Zusammenfassung**

Die vorliegende Erfindung betrifft eine landwirtschaftliche Quaderballenpresse (1) zur Verarbeitung von Erntegut zu quaderförmigen Ballen, umfassend zumindest eine Knotereinrichtung (10), wobei die Knotereinrichtung (10) zumindest nachfolgendes umfasst: zumindest einen Knoter (12) zur Verknotung zweier Bindegarnstränge (17, 18) eines Bindegarns zu einem Knoten (20), zumindest eine Halteeinrichtung (13) zur Halterung des Bindegarns während eines Knotenbildungsprozesses, wobei der Knoter (12) einen Knoterhaken (14) umfasst.

Um eine landwirtschaftliche Quaderballenpresse (1) der vorstehend beschriebenen Art dahingehend zu verbessern, dass eine Überwachung der Knotenbildung zuverlässiger stattfindet, wird erfindungsgemäß vorgeschlagen, dass die eine Sensoreinrichtung (21) zur Erzeugung von Bilddaten, die die Bindegarnstränge (17, 18) des Bindegarns im Knoterhaken (14) zu einem Zeitpunkt während des Knotenbildungsprozesses, bevor der Knoten gebildet ist, abbilden, sowie durch eine Verarbeitungseinrichtung (24), die dazu vorgesehen und eingerichtet ist, die Bilddaten mittels einer Analyseroutine unter Anwendung eines Algorithmus dahingehend auszuwerten, dass die Qualität des Knotens (20) bestimmt wird.

Ferner betrifft die Erfindung ein Verfahren zur Anwendung der erfindungsgemäßen landwirtschaftlichen Quaderballenpresse (1).

## Beschreibung

Die vorliegende Anmeldung betrifft eine landwirtschaftliche Quaderballenpresse zur Verarbeitung von Erntegut zu quaderförmigen Ballen gemäß dem Oberbegriff von Anspruch 1. Ferner betrifft die vorliegende Anmeldung ein Verfahren zum Betrieb einer solchen landwirtschaftlichen Quaderballenpresse gemäß dem Oberbegriff von Anspruch 6.

Die Quaderballenpresse umfasst zumindest eine Knotereinrichtung, wobei die Knotereinrichtung dazu dient, zwei Bindegarnstränge eines Bindegarns zu einem Knoten zu verknoten. Eine Quaderballenpresse umfasst typischerweise eine Mehrzahl solcher Knotereinrichtungen, die über eine Breite eines Presskanals der Quaderballenpresse verteilt angeordnet sind. Jede Knotereinrichtung ist dazu vorgesehen, zwei Bindegarnstränge eines Bindegarns, das um einen mittels der Quaderballenpresse gebildeten Quaderballen gelegt ist und auf einer Vorratsrolle vorgehalten wird, miteinander zu verknoten, sodass sich aus dem Bindegarn eine Endlosschlaufe bildet, die um den Quaderballen gelegt ist. Mittels solcher Bindegarne wird der jeweils gebildete Quaderballen zusammengehalten.

Zur Bildung eines jeweiligen Knotens umfasst die Knotereinrichtung einen Knoter, der wiederum einen Knoterhaken mit beispielsweise einer schwenkbeweglichen Zunge umfasst. Ferner umfasst die Knotereinrichtung eine Halteeinrichtung, mittels der das Bindegarn während eines Knotenbildungsvorgangs gehalten werden kann. Insbesondere ist die Halteeinrichtung dazu eingerichtet, die beiden Bindegarnstränge des Bindegarns so lange zu halten, bis mittels des Knoters die notwendigen Vorbereitungen zur endgültigen Bildung eines jeweiligen Knotens getroffen sind. Der Knoten wird sodann typischerweise mittels Ziehens an dem Bindegarn fertiggestellt, wobei gleichzeitig das Bindegarn von dem Knoter freigegeben wird.

Beispielhafte aus dem Stand der Technik bekannte Halteeinrichtungen umfassen ein Halteelement und ein Schneidelement. Das Halteelement kann insbesondere von einem Klemmrad gebildet sein, mittels dessen das Bindegarn in klemmender Weise gehalten werden kann. Hierbei wird das Bindegarn zwischen zwei Klemmelementen des Halteelements verklemmt. Mittels des Schneidelements wird das Bindegarn bei der Bildung jedes Knotens durchgeschnitten, sodass die mittels des Knotens gebildete Endlosschlaufe vereinzelt, das heißt von der Vorratsrolle des Bindegarns getrennt wird.

Die aus dem Stand der Technik bekannten Knoter zur Bildung des Knotens umfassen typischerweise neben dem Knoterhaken und der schwenkbeweglichen Zunge eine Knoterwelle sowie ein Zahnrad. Die bekannten Halteeinrichtungen weisen häufig eine Halterwelle und ein Zahnrad auf. Die Zahnräder des Knoters und der Halteeinrichtung sind typischerweise als Kegelräder ausgebildet und typischerweise dazu eingerichtet, mit einer Antriebsscheibe der Knotereinrichtung zusammenzuwirken, die um eine Drehachse drehantreibbar ist. Die aus dem Stand der Technik bekannte Antriebsscheibe weist zwei separate Zahnabschnitte auf, die sich jeweils zumindest in einem Teilwinkelbereich auf verschiedenen Radien um die Drehachse der Antriebsscheibe erstrecken. Die beiden Zahnabschnitte kämmen mit den Zahnrädern des Knoters und der Halteeinrichtung, wobei ein erster Zahnabschnitt mit dem Zahnrad des Knoters und ein zweiter Zahnabschnitt mit dem Zahnrad der Halteeinrichtung zusammenwirken. Diese Ausgestaltung führt dazu, dass im Zuge einer fortwährenden Drehbewegung der Antriebsscheibe während eines Betriebs der Knotereinrichtung sowohl der Knoter als auch die Halteeinrichtung zyklisch drehangetrieben werden, wenn ihre Zahnräder im Zuge einer jeweiligen Umdrehung der Antriebsscheibe mit den zugeordneten Zahnabschnitten kämmen. Auf diese Weise korrespondiert jede volle Umdrehung der Antriebsscheibe um ihre Drehachse mit einem vollen Drehzyklus sowohl des Knoters als auch der Halteeinrichtung. Ein voller Drehzyklus korrespondiert typischerweise mit einer Drehung des Knoterhakens um 360° um eine Längsachse der Knoterwelle und des Halteelements um 180° um eine Längsachse der Halterwelle.

Im Betrieb einer solchen Knotereinrichtung wird bei Fertigstellung eines Quaderballens mittels einer Bindenadel ein erster Bindegarnstrang des jeweiligen Bindegarns zu der Halteeinrichtung geführt, mittels der bereits ein zweiter Bindegarnstrang desselben Bindegarns gehalten ist. Das Bindegarn wird mithin ausgehend von der Halteeinrichtung um den Quaderballen und wieder zurück zu Halteeinrichtung geführt, sodass es den Quaderballen umlaufend einfasst. Die Bindenadel ist hierbei dafür verantwortlich, das Bindegarn nach Fertigstellung eines Quaderballens an einem Ende des Quaderballens entlang zu der Halteeinrichtung zu führen, wobei das Bindegarn typischerweise von einer Unterseite des Presskanals her mittels der Bindenadel angereicht wird. Infolge der Zuführung des Bindegarns mittels der Bindenadel liegen beide Bindegarnstränge des Bindegarns auf dem Knoterhaken des Knoters auf, sodass sie im Weiteren mittels des Knoterhakens verknotet werden können. Zu diesem Zweck wird der Knoter beispielsweise mittels der Antriebsscheibe drehangetrieben, wobei der Knoterhaken eine Drehung von in der Regel 360° ausführt. Im Zuge dieser Bewegung wird die Zunge des Knoterhakens ausgehend von einer Schließstellung in eine Offenstellung und zurück in die Schließstellung überführt. Hierbei werden zunächst erste Teilabschnitte des Bindegarns, die auf dem Knoterhaken bzw. auf der Zunge aufliegen, mittels der Zunge angehoben, wobei infolge der Drehung des Knoterhakens zweite Teilabschnitte unterhalb der Zunge auf dem Knoterhaken abgelegt werden. Sobald die Zunge zurück in ihre Schließstellung überführt ist, sind die zweiten Teilabschnitte unter der Zunge gefasst, sodass die zweiten Teilabschnitte bei Ausübung einer Zugkraft auf das Bindegarn unter die ersten Teilabschnitte, die auf der Zunge liegen, durchgezogen werden, sodass sich in gewünschter Weise ein Knoten bildet.

Zuvor wird jedoch zunächst die Halteeinrichtung mittels der Antriebsscheibe drehangetrieben. Im Zuge dieser Drehung des Halteelements wird der mittels der Bindenadel angereichte Bindegarnstrang des Bindegarns mittels des Halteelements erfasst, typischerweise mittels einer Klemmwirkung, und dem Schneidelement zugeführt, mittels dessen das Bindegarn durchgeschnitten wird. Auf diese Weise wird ein neues Ende des Bindegarns gebildet, das fortan mittels des Halteelements gehalten ist. Das andere Ende ist frei, sodass der Knoten in der vorstehend beschriebenen Weise gebildet und aus dem Knoter herausgezogen werden kann. Die so gebildete Endlosschlaufe des Bindegarns, die nunmehr um den Quaderballen herum gelegt ist, ist entsprechend losgelöst von der Vorratsrolle des Bindegarns.

Bekannte Knotereinrichtungen haben sich in der Praxis zwar bewährt, lassen jedoch an Zuverlässigkeit hinsichtlich einer sicheren Knotenbildung vermissen. Insbesondere kommt es in der Praxis immer wieder vor, dass ein Knoten nicht bestimmungsgemäß fertiggestellt wird, weil beispielsweise das Bindegarn sich vorzeitig von dem Knoter oder der Halteeinrichtung löst oder nicht richtig mittels der Zunge erfasst wird. Eine gelegentlich auftretende fehlerhafte Knotenbildung führt zu einem ineffizienten Betrieb der Quaderballenpresse. Bei der nicht sachgemäßen Bildung von Knoten, kann der Quaderballen nicht ordnungsgemäß fertiggestellt werden. Das Material des unfertigen Ballens muss aus dem Presskanal beseitigt und das Bindegarn neu in die Klemmvorrichtung eingeführt und in dieser befestigt werden. Die damit verbundenen Arbeitsunterbrechungen beeinträchtigt erheblich die Wirtschaftlichkeit des Erntevorgangs. Knoten von geringer Qualität können sich auch erst nach dem Pressen, beispielsweise beim Transport der Ballen lösen, was ebenfalls unvorteilhaft ist und einen zusätzlichen Arbeitsaufwand bedingt. Die Gründe für eine nicht ordnungsgemäße Bildung eines Knotens oder eine Bildung von Knoten mit schlechter Qualität können dabei vielschichtig sein.

Es besteht somit grundsätzlich ein Bedarf Knoten von hoher Qualität zu bilden und, sofern Knoten mit schlechter Qualität gebildet werden sollten, entsprechende Einstellungen an der Quaderballenpresse oder an den bei der Bildung der Knoten beteiligten Aggregaten und Komponenten vorzunehmen.

Folglich gibt es mittlerweile verschiedenste Möglichkeiten die Knotenbildung zu überwachen.

Mechanische Lösungen zur Überwachung des Betriebs der Knotereinrichtung sind aus der EP 2 837 281 A1 und der DE 295 02 198 U1 bekannt. In beiden Dokumenten wird die Position der Knoterzunge relativ zu dem Knoterhaken mittels eines Sensors überwacht.

Eine weitere Vorrichtung zur Überwachung geht aus der europäischen Patentanmeldung EP 4 042 858 A1 hervor. Diese beschreibt ein bildbasiertes Verfahren zur Positionsbestimmung in Verbindung mit einer Knotereinrichtung. Das Verfahren umfasst den Empfang von Kamerabildern, die von einer von der Ballenpresse montierten Diagnosekamera aufgenommen wurden, in einem Bildverarbeitungssystem. Ein Sichtfeld der Diagnosekamera umfasst zumindest teilweise einen beabsichtigten Bewegungspfad, entlang dessen sich eine bewegliche Komponente der Knotereinrichtung beispielsweise die Bindenadel bewegen soll. Das Bildverarbeitungssystem analysiert die Kamerabilder, um festzustellen, ob eine aufgezeichnete zeitabhängige Position (Ist-Position) der sich bewegenden Komponente übermäßig von einer erwarteten zeitabhängigen Position (SollPosition) der sich bewegenden Komponente abweicht, die entlang des beabsichtigten Bewegungspfads aufgenommen wurde. Das Bildverarbeitungssystem erzeugt eine Meldung auf einer Anzeigevorrichtung, dass eine Positionsanpassung der sich bewegenden Komponente empfohlen wird, wenn die aufgezeichnete abhängige Position übermäßig von der erwarteten zeitabhängigen Position abweicht.

Ein weiteres bildbasiertes Verfahren zur Beurteilung der Qualität von fertig gebildeten Knoten wird in der EP 3 811 768 A1 beschreiben. Ein Ballenqualitätssystem umfasst hierbei ein Bildverarbeitungssystem zur Erkennung von Knotenfehlern. Das Bildverarbeitungssystem enthält einen oder mehrere Bildsensoren, ein Steuersystem und eine grafische Anzeige. Mittels des Bildverarbeitungssystems werden Bilder von den fertiggestellten Knoten aufgenommen und hinsichtlich einer Fehlbildung bewertet. Wenn das Steuersystem feststellt, dass ein Fehler aufgetreten ist, kann das Steuersystem einen Hinweis auf einen solchen Fehler an die Anzeige übermitteln, um den Bediener der Ballenpresse zu warnen.

Der vorliegenden Anmeldung liegt mithin die Aufgabe zugrunde, eine landwirtschaftliche Quaderballenpresse der vorstehend beschriebenen Art dahingehend zu verbessern, dass eine Überwachung der Knotenbildung zuverlässiger stattfindet.

Die zugrunde liegende Aufgabe wird erfindungsgemäß mittels einer Quaderballenpresse mit den Merkmalen des Anspruchs 1 gelöst. Vorteilhafte Ausgestaltungen ergeben sich aus den zugehörigen Unteransprüchen sowie der Beschreibung.

Die erfindungsgemäße Quaderballenpresse ist durch eine Sensoreinrichtung zur Erzeugung von Bilddaten, die die Bindegarnstränge des Bindegarns im Knoterhaken zu einem Zeitpunkt während des Knotenbildungsprozesses, bevor der Knoten gebildet ist, abbilden sowie durch eine Verarbeitungseinrichtung, die dazu vorgesehen und eingerichtet ist, die Bilddaten mittels einer Analyseroutine unter Anwendung eines Algorithmus dahingehend auszuwerten, dass die Qualität des Knotens bestimmt wird, gekennzeichnet.

Mit Hilfe der Sensoreinrichtung ist vorgesehen, dass Bilddaten erzeugt werden, die die Bindegarnstränge des Bindegarns im Knoterhaken zeigen. Der Zeitpunkt, an dem die Bilddaten erzeugt werden, findet während des Knotenbildungsprozesses statt, und zwar vor der wirklichen Knotenbildung, das heißt bevor der Knoten gebildet wurde. Die von der Sensoreinrichtung erzeugten Bilddaten stellen einen Ist-Zustand des Bindegarns im Knoterhaken dar. Vorzugsweise wird bei jedem einzelnen Knotenbildungsprozess, der zumindest einen Knotereinrichtung, immer zur gleichen Zeit ein Ist-Zustand der Bindegarnstränge des Bindegarns erzeugt.

Es ist denkbar, dass beispielsweise bei Vorliegen einer Knotereinrichtung mit einer schwenkbeweglichen Zunge die wirkliche Knotenbildung zu einem Zeitpunkt stattfindet, an dem die unter der Zunge angeordneten Teilabschnitte des Bindegarns durch die auf der Zunge angeordneten Teilabschnitte des Bindegarns hindurch- und festgezogen werden. Die Erzeugung der Bilddaten würde somit vor dem Zeitpunkt des Durchziehens der unter der Zunge angeordneten Teilabschnitte durch die oberhalb der Zunge angeordneten Teilabschnitte stattfinden.

Die Verarbeitungseinrichtung ist dazu vorgesehen, die Qualität der Knoten zu bestimmen. Die Verarbeitungseinrichtung ist derart eingerichtet, dass die Bilddaten mittels einer Analyseroutine unter Verwendung eines Algorithmus ausgewertet werden. Hierbei ist es denkbar, dass der von der Sensoreinrichtung erzeugte Ist-Zustand mit einem von der Verarbeitungseinrichtung abgespeicherten Soll-Zustand der Bindegarnstränge des Bindegarns im Knoterhaken verglichen wird. Es ist nicht zwingend erforderlich, dass der Knoten, dessen Qualität bestimmt wird, auch wirklich gebildet wird. Vielmehr ist der Algorithmus der Verarbeitungseinrichtung vorzugsweise derart ausgelegt, dass dieser anhand der Analyseroutine die Qualität des noch nicht gebildeten Knotens bestimmen und entsprechend vorhersehen kann, ob ein qualitativ hochwertiger Knoten gebildet wird oder nicht. Die Verarbeitungseinrichtung kann beispielsweise von einer lokalen Datenverarbeitungseinrichtung, beispielsweise einem Industrie-PC, gebildet sein, die an der Quaderballenpresse angeordnet ist.

Die erfindungsgemäße Quaderballenpresse hat viele Vorteile. Es hat sich herausgestellt, dass mittels der Erzeugung von Bilddaten, der Auswertung der Bilddaten und einer anschließenden Anpassung einer Einstellung der Knotereinrichtung eine qualitativ hochwertigere Knotenbildung mittels der erfindungsgemäßen Quaderballenpresse gegenüber den bekannten Quaderballenpressen möglich ist. Dies ist darauf zurückzuführen, dass beispielsweise die zeitliche Abfolge der Bewegungen des Knoters und der Halteeinrichtung und/oder der Zufuhr von Erntegut je nach Bedarf zu einem sehr frühen Zeitpunkt optimiert werden kann. Das heißt, wenn mittels des Algorithmus der Verarbeitungseinrichtung festgestellt wird, dass die Bindegarnstränge, auf den von der Sensoreinrichtung erzeugten Bilddaten, fehlerhaft verknotet werden würden, eine automatische oder manuelle Anpassung der Einstellungen an der Knotereinrichtung stattfinden kann, um den Knotenbildungsprozess zu optimieren. Denkbar ist hierbei beispielsweise, dass die Quaderballenpresse gestoppt wird, bis der Fehler behoben ist, der Knotenbildungsprozess von Neuem startet, Einstellungen an der Knotereinrichtung vorgenommen werden, ein Bediener lediglich die Information erlangt, dass Einstellungen an der Knotereinrichtung vorgenommen wurden und/oder dem Bediener eine Fehlermeldung angezeigt wird und dieser entsprechend selbst Abhilfe schaffen kann. Die Einstellungen an der Knotereinrichtung können entsprechend beispielsweise von dem Bediener und/oder der Verarbeitungseinrichtung und/oder einer mit der Verarbeitungseinrichtung kommunizierenden Steuereinheit geändert werden. Eine derartige Anpassung kann beispielsweise eine Änderung der Vorspannkraft des Bindegarns oder eine Änderung der Geschwindigkeit eines Drehzyklus der Knotereinrichtung sein. Selbstverständlich sind auch weitere andere Einstellungen denkbar, die den Knotenbildungsprozess optimieren.

Vorteilhafterweise erkennt der Algorithmus auch, wenn das Bindegarn aufgebraucht oder gerissen ist. Ein Bediener der Quaderballenpresse kann somit zu einem sehr frühen Zeitpunkt eingreifen und Abhilfe schaffen, bevor nicht ausreichend verknotete Quaderballen aus der Quaderballenpresse herauskommen oder das Material des nicht fertigen Quaderballens mit viel Aufwand aus der Quaderballenpresse entfernt werden muss.

Eine besonders vorteilhafte Ausgestaltung der erfindungsgemäßen Quaderballenpresse sieht vor, dass die von der Sensoreinrichtung erzeugten Bilddaten eine Lage der Bindegarnstränge im Knoterhaken und/oder eine Dicke der Bindegarnstränge und/oder eine Farbe der Bindegarnstränge und/oder eine Drehung der Bindegarnstränge des Bindegarns im Knoterhaken zu einem Zeitpunkt des Knotenbildungsprozesses abbilden. Folglich ist vorzugsweise vorgesehen, dass die Verarbeitungseinrichtung dazu eingerichtet ist, die Bilddaten mittels der Analyseroutine unter Anwendung des Algorithmus dahingehend auszuwerten, dass die Qualität des Knotens anhand der Lage der Bindegarnstränge im Knoterhaken, der Dicke der Bindegarnstränge, der Farbe der Bindegarnstränge und/oder der Drehung der Bindegarnstränge im Knoterhaken bestimmt wird. Wie zuvor bereits erwähnt, findet die Erzeugung der Bilddaten zu einem Zeitpunkt statt, an dem der Knoten noch nicht gebildet ist. Die Erzeugung der Bilddaten erfolgt beispielsweise bevor die unter der Zunge befindlichen Teilabschnitte des Bindegarns durch die oberhalb der Zunge angeordneten Teilabschnitt des Bindergarns gezogen sind. Insbesondere die Lage der Bindegarnstränge in dem Konterhaken können eine präzise Auskunft darüber geben, ob eine qualitativ hochwertige Knotenbildung stattfinden wird. Weist einer der beiden Bindegarnstränge beispielsweise eine zu geringe Vorspannkraft auf, ist dies an der Lage des entsprechenden Bindegarnstrangs zu erkennen, woraufhin die Vorspannkraft entsprechend angepasst werden kann. Ebenso können die Dicke, die Farbe und/oder die Drehung der Bindegarnstränge Auskunft darüber geben, ob ein qualitativ guter Knoten erzeugt wird. Die erzeugten Bilddaten der Lage, der Dicke, der Farbe und/oder der Drehung der Bindegarnstränge zeigen einen Ist-Zustand. Mittels des Algorithmus der Verarbeitungseinrichtung wird der Ist-Zustand der Lage, der Dicke, der Farbe und/oder der Drehung des Bindegarns mit einem abgespeicherten Soll-Zustand der Lage, der Dicke, der Farbe und/oder der Drehung des Bindegarns verglichen und ausgewertet.

In einer vorteilhaften Ausgestaltung der erfindungsgemäßen Quaderballenpresse umfasst die Quaderballenpresse eine Mehrzahl von Knotereinrichtungen, vorzugsweise sechs Knotereinrichtungen, zur Bildung jeweils eines Knotens um einen Quaderballen. Die Knotereinrichtungen sind vorzugsweise über eine Breite eines Presskanals der Quaderballenpresse verteilt angeordnet. Es hat sich herausgestellt, dass die Umschnürung der Quaderballen an sechs Positionen am geeignetsten ist, um die Quaderballen zusammenzuhalten, ohne dass diese bei weiteren Transportschritten auseinanderfallen. Typischerweise sind alle Knotereinrichtungen derart miteinander verbunden, dass die Bewegungsabläufe der einzelnen Komponenten aller Knotereinrichtungen gleich sind. Das heißt, dass unter anderem die Knoter, die Halteeinrichtung und die Bindenadel einer Knotereinrichtung im Laufe eines Knotenbildungsprozesses zeitgleich die gleichen Prozessschritte durchführen. Dies führt in der Regel dazu, dass bei der Bildung eines fehlerhaften Knotens alle anderen Knoten ebenfalls fehlerhaft sind. Ebenso kann jedoch auch davon ausgegangen werden, dass bei einem korrekt gebildeten Knoten die anderen ebenfalls korrekt ausgebildet sind, sofern das Bindegarn nicht gerissen oder aufgebraucht ist.

Es kann von Vorteil sein, wenn die erfindungsgemäße Quaderballenpresse derart ausgebildet ist, dass der zumindest einen Knotereinrichtung die Sensoreinrichtung zugeordnet ist. Wenn die Verarbeitungseinrichtung Bilddaten empfängt, die einen Ist-Zustand eines fehlerhaften Knotens abbilden, kann typischerweise davon ausgegangen werden, dass die anderen Knoten ebenfalls nicht korrekt gebildet wurden, wie zuvor bereits dargestellt wurde. Im Zuge dessen können beispielsweise Einstellungen an allen Knotereinrichtungen vorgenommen werden, die den Knotenbildungsprozess aller Knoter korrigieren, sodass bestenfalls eine qualitativ hochwertige Knotenbildung erfolgt.

Da eine Quaderballenpresse herkömmlicher Weise eine Mehrzahl von Knotereinrichtungen umfasst, können gemäß einer bevorzugten Ausführungsform mindestens zwei der Knotereinrichtungen, besonders bevorzugt jeder der Knotereinrichtungen jeweils eine Sensoreinrichtung zugeordnet sein. Es kann von Vorteil sein, wenn jeder Knotereinrichtung eine Sensoreinrichtung zugeordnet ist, denn dann kann möglichst schnell erkannt werden, wenn ein Knoter beispielsweise defekt ist, das Bindegarn an einem Knoter gerissen oder aufgebraucht ist. Bei der Überwachung lediglich einer Knotereinrichtung würde ein Defekt einer nicht überwachten Knotereinrichtung entsprechend nicht erkannt werden. Denkbar wäre auch, dass zumindest die beiden äußeren und eine mittig liegende Knotereinrichtung überwacht werden. Hiermit könnte sichergestellt werden, dass bei einem Defekt einer Knotereinrichtung ein Auseinanderfallen des Quaderballens möglichst verhindert wird, da der Quaderballen mittels mindestens dreier Bindegarnstränge zumindest vorübergehend gehalten wird. Ein Ausräumen der Störung des Knotenbildungsprozesses sollte dennoch schnellstmöglich erfolgen, damit die weiteren Quaderballen wieder ausreichend von den Bindegarn eingefasst sind, um nicht bei weiteren Arbeiten auseinanderzufallen.

In einer besonders vorteilhaften Ausgestaltung ist die mindestens eine Sensoreinrichtung von einer Bildkamera gebildet. Aufgabe der Bildkamera ist es den Ist-Zustand während des Knotenbildungsprozesses zu erzeugen. Hierbei ist es denkbar, dass die Bildkamera entweder ein einzelnes Bild während des Knotenbildungsprozesses erzeugen oder Bildsequenzen eines jeweiligen Knotenbildungsprozesses, beispielsweise in Form von einer Videoaufnahme anfertigt. Im Sinne der vorliegenden Anmeldung sind die Bilddaten entsprechend entweder die einzelnen Bilder oder Bildsequenzen. Vorteilhafterweise werden die Bilddaten von einem unfertigen Knoten, also in einem möglichst frühen Stadion des Knotenbildungsprozesses angefertigt. Dies bringt den Vorteil mit sich, dass anhand dieser Bilddaten sofort eingegriffen und eine nochmalige Knotenbildung durchgeführt werden kann, anstatt das der Quaderballen unfertig gebunden oder mit qualitativ minderwertigen Knoten weitergeschoben wird.

Eine besonders vorteilhafte Ausgestaltung der Erfindung sieht vor, dass die Verarbeitungseinrichtung derart eingerichtet ist, dass die Analyseroutine zur Auswertung der Bilddaten künstliche Intelligenz anwendet. Der Knotenbildungsprozess dauert typischerweise maximal 1,5 Sekunden. Für ein menschliches Auge ist es somit kaum erkennbar, ob die Knotenbildung wunschgemäß erfolgt ist. Infolgedessen ist eine Einrichtung der Verarbeitungseinrichtung mit künstlicher Intelligenz von Vorteil, da mittels dieser sekundenschnell ein Abgleich der erzeugten Bilddaten der Bindegarnstränge des Bindegarns im Knoterhaken im aktuellen Knotenbildungsprozesses (Ist-Zustand) mit abgespeicherten, vordefinierten Bilddaten des Bindegarnstränge des Bindegarns in einem wunschgemäß verlaufenden Knotenbildungsprozess (Soll-Zustand) durchführbar ist und somit entsprechend eingegriffen werden kann.

Die zugrunde liegende Aufgabe wird ferner in verfahrenstechnischer Hinsicht mittels des Verfahrens mit den Merkmalen des Anspruchs 6 gelöst. Vorteilhafte Ausgestaltungen ergeben sich aus den zugehörigen Unteransprüchen sowie der Beschreibung.

Das erfindungsgemäße Verfahren ist dadurch gekennzeichnet, dass mittels der Sensoreinrichtung Bilddaten erzeugt werden, welche die Bindegarnstränge des Bindegarns im Knoterhaken zu einem Zeitpunkt während des Knotenbildungsprozesses, bevor der Knoten gebildet wird, abbilden und die Bilddaten mittels einer Verarbeitungseinrichtung in einer Analyseroutine unter Anwendung eines Algorithmus dahingehend ausgewertet werden, dass die Qualität des Knotens bestimmt wird. Das erfindungsgemäße Verfahren wird bevorzugt mittels einer erfindungsgemäßen Quaderballenpresse ausgeführt. Die Verarbeitungseinrichtung kann körperlich, beispielsweise in Form einer Datenverarbeitungseinrichtung, lokal an der Quaderballenpresse angeordnet sein. Ebenfalls ist es denkbar, dass die Verarbeitungseinrichtung lokal an einer Zugmaschine angeordnet ist, mittels der die Quaderballenpresse gezogen und angetrieben wird. Ebenfalls ist es denkbar, dass die Verarbeitungseinrichtung in der Cloud angeordnet ist, wobei ein Datenaustausch zwischen der Sensoreinrichtung und der Verarbeitungseinrichtung vorzugsweise über das Internet erfolgt. Bei letzterer Ausgestaltung kann die Quaderballenpresse eine Sende-/Empfangseinheit aufweisen, die dazu vorgesehen und eingerichtet ist, von der Sensoreinrichtung erzeugte Bilddaten an die Verarbeitungseinrichtung zu senden, insbesondere über das Internet, und von der Verarbeitungseinrichtung Informationen zu empfangen, beispielsweise Signale zur Einstellung mindestens eines Parameters der Knotereinrichtung.

Hieraus ergeben sich die zuvor genannten Vorteile. Der Knotenbildungsprozess kann zu einem sehr frühen Zeitpunkt mittels der von der Sensoreinrichtung erzeugten Bilddaten überwacht werden, wobei die erzeugten Bilddaten (Ist-Zustand) mittels der Analyseroutine unter Anwendung des Algorithmus mit abgespeicherten Bilddaten (Soll-Zustand) von der Verarbeitungseinrichtung dahingehend ausgewertet werden, dass die Qualität des Knotens bestimmt wird. Hierbei ist es nicht zwingend erforderlich, dass der Knoten auch wirklich gebildet wird. Der Algorithmus der Verarbeitungseinrichtung ist vorzugsweise derart ausgelegt, dass dieser anhand der Analyseroutine die Qualität des noch nicht gebildeten Knotens bestimmen kann. Entsprechend wird die Erzeugung der Bilddaten vor der wirklichen Knotenbildung stattfinden.

Wenn die Qualität des Knotens nicht ausreichend ist, kann der Knotenbildungsprozess gegebenenfalls unterbunden werden. Bestenfalls kann die zuvor fehlerhafte Knotenbildung wiederholt werden, sodass der Quaderballen ohne weiteres aus der Quaderballenpresse herausgeführt werden kann. Ein händisches Ausräumen der Quaderballenpresse oder die Bildung eines Quaderballen mit qualitativ schlechten Knoten auf dem Feld können vermieden und somit Zeit eingespart werden. Wenn der Knoten bereits mit schlechter Qualität gebildet worden wäre, kann dieser nicht mehr maschinell gelöst werden. Ebenfalls ist es denkbar, dass die Knotenbildung zwar nicht qualitativ hochwertig ist, aber ausreicht, um den Quaderballen unbeschadet zu transportieren. In diesem Fall kann die Quaderballenpresse einfach weiterarbeiten und die Einstellungen für die darauffolgende Knotenbildung können angepasst werden, so dass die darauffolgenden Knoten qualitativ hochwertig gebildet werden.

Eine weitere Ausgestaltung des erfindungsgemäßen Verfahrens sieht vor, dass mittels der Sensoreinrichtung Bilddaten erzeugt werden, welche eine Lage der Bindegarnstränge im Knoterhaken und/oder eine Dicke der Bindegarnstränge und/oder eine Farbe der Bindegarnstränge und/oder eine Drehung der Bindegarnstränge im Knoterhaken während des Knotenbildungsprozesses abbilden. Mittels der Sensoreinrichtung kann die Lage, die Dicke, die Farbe und/oder die Drehung der Bindegarnstränge im Knoterhaken sehr gut erfasst werden. Folglich können die Bilddaten vorzugsweise mittels der Verarbeitungseinrichtung in der Analyseroutine unter Anwendung des Algorithmus dahingehend ausgewertet werden, dass die Qualität des Knotens anhand der Lage und/oder der Dicke und/oder der Farbe und/oder der Drehung der Bindegarnstränge im Knoterhaken bestimmt wird. Die Lage, die Dicke, die Farbe und/oder die Drehung des Bindegarns in dem Knoterhaken kann für sich allein genommen oder in Kombination einen Hinweis darauf geben, ob der Knotenbildungsprozess ordnungsgemäß durchgeführt wird oder nicht. Bestenfalls kann anhand der Lage, der Dicke, der Farbe und/oder der Drehung festgestellt werden, welche der Einstellungen an der Knotereinrichtung vorgenommen werden müssen.

Vorzugsweise umfasst die Quaderballenpresse zumindest eine um eine Drehachse drehantreibbare Antriebsachse zum zyklischen Antrieb sowohl des Knoters als auch der Halteeinrichtung.

Eine vorteilhafte Ausgestaltung der Erfindung sieht vor, dass der Knoter einen Knoterhaken mit einer schwenkbeweglichen Zunge umfasst, und die Halteinrichtung ein Halteelement und ein Schneidelement umfasst.

Das erfindungsgemäße Verfahren weiter ausgestaltend wird mittels einer Bindenadel ein erster Bindegarnstrang des Bindegarns zu der Halteeinrichtung geführt, mittels der bereits ein zweiter Bindegarnstrang desselben Bindegarns gehalten ist, wobei die beiden Bindegarnabschnitte des Bindegarns derart positioniert sind, dass sie mittels des Knoterhakens verarbeitbar sind. Der Knoter wird mittels der Antriebsscheibe drehangetrieben, wobei der Knoterhaken des Knoters während eines Drehzyklus eine Drehung um mindestens 360° ausführt. Im Zuge des Drehzyklus wird die Zunge des Knoterhakens von einer Schließstellung in eine Offenstellung und zurück in die Schließstellung überführt, wodurch die beiden Bindegarnstränge des Bindegarns derart übereinander geführt werden, dass erste Teilabschnitte des Bindegarns auf der Zunge und zweite Teilabschnitte des Bindegarns unter der Zunge liegen. Die Halteeinrichtung wird mittels der Antriebsscheibe drehangetrieben, wobei der mittels der Bindenadel angereichte erste Bindegarnstrang des Bindegarns mittels der Halteeinrichtung gehalten ist und mittels des Schneidelements durchgeschnitten wird, sodass ein neues Ende des Bindegarns gebildet wird, das mittels des Halteelements der Halteeinrichtung gehalten ist. Die Bilddaten werden dann erzeugt, wenn die ersten Teilabschnitte des Bindegarns auf der Zunge und die zweiten Teilabschnitte des Bindegarns unter der Zunge liegen bevor der Knoten gebildet wird.

Zu diesem Zeitpunkt sind die zweiten Teilabschnitte des Bindegarns noch nicht durch die ersten Teilabschnitte des Bindegarns hindurchgezogen. Das heißt, es hat noch keine Bindung des Knotens stattgefunden. Es hat sich herausgestellt, dass eine Überwachung des Knotenbildungsprozesses zu diesem frühen Zeitpunkt bereits anzeigt, ob ein guter oder fehlerhafter Knoten während des weiteren Knotenbildungsprozesses gebildet wird. Wenn beispielsweise der obere Teilabschnitt oder der untere Teilabschnitt des Bindegarns nicht ordnungsgemäß übereinander liegen, kommt es zu einer fehlerhaften Knotenbildung. Diese frühzeitige Überwachung des Knotenbildungsprozesses bringt den Vorteil mit sich, dass der Knotenbildungsprozess frühzeitig gestoppt und gegebenenfalls fehlerhaft positionierte Bindegarnstränge sich ohne Weiteres aus ihrer Position lösen lassen, ohne einen großen Zeitverlust hinnehmen zu müssen, da noch keine Verknotung, also ein Durchziehen der unterhalb der Zunge angeordneten Teilabschnitte durch die oberhalb der Zunge angeordneten Teilabschnitte, stattgefunden hat. Anschließend kann mit neuen Einstellungen ein neuer, korrekter Knoten gebildet werden. Die Einstellungen können manuell oder automatisch von der Verarbeitungseinrichtung und/oder einer Steuereinheit geändert werden.

Eine alternative Ausgestaltung des Verfahrens sieht vor, dass bei der Erzeugung der Bilddaten eine Sequenz an Bildern während des Knotenbildungsprozesses vor der Knotenbildung gemacht wird, wobei die Sequenz während des Drehzyklus erzeugt wird, bei dem die Zunge des Knoterhakens von einer Schließstellung in eine Offenstellung und zurück in die Schließstellung überführt wird, wodurch die beiden Bindegarnstränge des Bindegarns derart übereinander geführt werden, dass erste Teilabschnitte des Bindegarns auf der Zunge und zweite Teilabschnitte des Bindegarns unter der Zunge liegen. Dies bringt, wie zuvor bereits ausgeführt, den Vorteil mit sich, dass zu einem sehr frühen Zeitpunkt bereits erkannt und eine ordnungsgemäße Knotenbildung durchgeführt werden kann, wodurch bei einer nicht ordnungsgemäßen Knotenbildung des Bindegarns, das Bindegarn in dieser Position schnell wieder gelöst und ein neuer Knotenbildungsprozess durchgeführt werden kann. Die zu verarbeitende Bilddatenmenge ist jedoch wesentlich größer als bei der zuvor beschriebenen Vorgehensweise. Ein Vorteil ist wiederum, dass ein noch besserer Abgleich gemacht und gegebenenfalls zu einem noch früheren Zeitpunkt eingegriffen werden kann.

Eine besonders bevorzugte Ausführungsform des Verfahrens sieht vor, dass die Analyseroutine zur Auswertung der Bilddaten künstliche Intelligenz anwendet. Da der Knotenbildungsprozess in der Regel kürzer als 1,5 Sekunden dauert, ist eine Beurteilung eines guten Knotenbildungsprozesses für einen Menschen fast unmöglich. Dem kann mit Hilfe der künstlichen Intelligenz Abhilfe geschaffen werden. Eine künstliche Intelligenz kann derart trainiert sein, dass diese innerhalb weniger Millisekunden einen Abgleich zwischen dem Ist-Zustand des Knotenbildungsprozesses und dem Soll-Zustand des Knotenbildungsprozesses durchführen kann. Ebenso kann eine künstliche Intelligenz mehrere Parameter innerhalb kürzester Zeit auswerten, was für einen Menschen unmöglich ist.

Weiterhin kann das erfindungsgemäße Verfahren dann von besonderem Vorteil sein, wenn auf Basis der ausgewerteten Bilddaten von der Verarbeitungseinrichtung selbst Einstellungen an der Knotereinrichtung des Quaderballenpresse vorgenommen werden. Bestenfalls kann die Verarbeitungseinrichtung anhand der verarbeiteten Bilddaten selbst erkennen, welche Parameter an der Knotereinrichtung zum entsprechenden Zeitpunkt nicht zu dem gewünschten Knotenergebnis führen. Dies kann beispielsweise die Vorspannkraft des Bindegarns oder die Geschwindigkeit des Knotenbildungsprozesses oder aber die Kraft, mit der ein Presskolben im Presskanal der Quaderballenpresse das Erntegut zum Ballen verdichtet, betreffen. Die Verarbeitungseinrichtung ist dazu eingerichtet, entsprechende Signale an die entsprechenden Komponenten weitergeben zu können, welche sich dann anhand der von der Verarbeitungseinrichtung empfangenen Signale anpassen.

Die Erfindung ist nachstehend anhand eines Ausführungsbeispiels, das in den Figuren dargestellt ist, näher erläutert. Es zeigt:
- Fig. 1:: Einen Querschnitt durch eine Quaderballenpresse, die mit einer Knotereinrichtung und einer erfindungsgemäßen Überwachungseinrichtung ausgestattet ist,
- Fig. 2:: Knotereinrichtung während eines zweiten Schrittes eines Knotenbildungsprozesses mittels der Knotereinrichtung gemäß Figur 1,
- Fig. 3:: erfindungsgemäße Überwachungseinrichtung gerichtet auf eine Knotereinrichtung gemäß Figur 1,
- Fig. 4:: eine von der Überwachungseinrichtung gemäß Figur 1 erzeugten Bilddatei und einem daraus folgenden Knotenergebnis, und
- Fig. 5:: eine weitere von der Überwachungseinrichtung gemäß Figur 1 erzeugte Bilddatei und einem daraus folgenden Knotenergebnis.

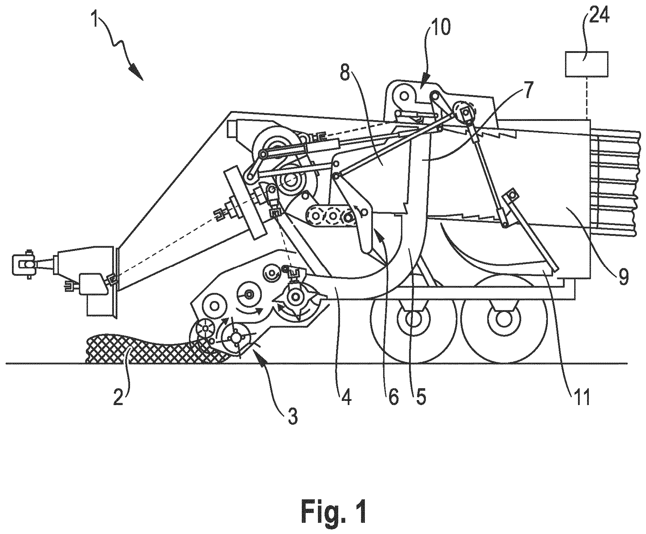

Ein Ausführungsbeispiel, das in den **Figuren 1 bis 5** dargestellt ist, betrifft eine landwirtschaftliche Quaderballenpresse **1,** die in **Figur 1** in einem Querschnitt dargestellt ist. Die Quaderballenpresse **1** ist dazu geeignet, Erntegut **2,** das auf einem Untergrund aufliegt, mittels eines Pick-ups **3** von dem Untergrund aufzuheben und zu verarbeiten. Hierbei kann das Erntegut **2** zunächst einem Schneidrotor **4** zugeleitet werden, mittels dessen das Erntegut **2** zerkleinert wird. Sodann wird das Erntegut **2** in einen Vorkanal **5** weitergeleitet und mittels eines Raffers **6** vorverdichtet. Ausgehend von dem Vorkanal **5** wird das Erntegut **2** zyklisch in einen Presskanal **7** überführt, in dem das Erntegut **2** mittels eines sich in dem Presskanal **7** vor und zurück bewegenden Verdichterkolbens **8** erfasst und verdichtet wird. Hierbei wird das Erntegut **2** mit jedem Zyklus des Verdichterkolbens **8** gegen bereits in dem Presskanal **7** befindliches Erntegut gepresst. Da der Presskanal **7** eine rechteckige Querschnittsform aufweist, entstehen auf diese Weise die typischen quaderförmigen Quaderballen. Um das Erntegut nach Fertigstellung eines Quaderballens in der Ballenform zusammenzuhalten, werden die fertigen Quaderballen **9** mit Bindegarn umschlungen, das in Form mehrerer Endlosschlaufen um den Quaderballen **9** herum gelegt wird und auf diese Weise ein ungewünschtes "Auseinanderfallen" des Ernteguts verhindert.

Die Applikation des Bindegarns an einem jeweiligen Quaderballen **9** erfolgt mittels einer Mehrzahl von Knotereinrichtungen **10.** Die Knotereinrichtungen **10** sind in Reihe hintereinander über eine Breite des Presskanals **7** verteilt angeordnet, sodass ein jeweiliger Quaderballen **9** mit einer Mehrzahl der Endlosschlaufen eingefasst werden kann. Jede der Knotereinrichtungen **10** wirkt mit einer Bindenadel **11** zusammen, die dazu geeignet ist, das Bindegarn von einer Unterseite des Presskanals **7** her nach Fertigstellung eines Quaderballens **9** nach oben zu führen und der Knotereinrichtung **10** anzureichen, sodass mittels der Knotereinrichtung **10** unter Bildung eines Knotens eine Endlosschlaufe des Bindegarns gebildet und der Quaderballen **9** auf diese Weise eingefasst werden kann.

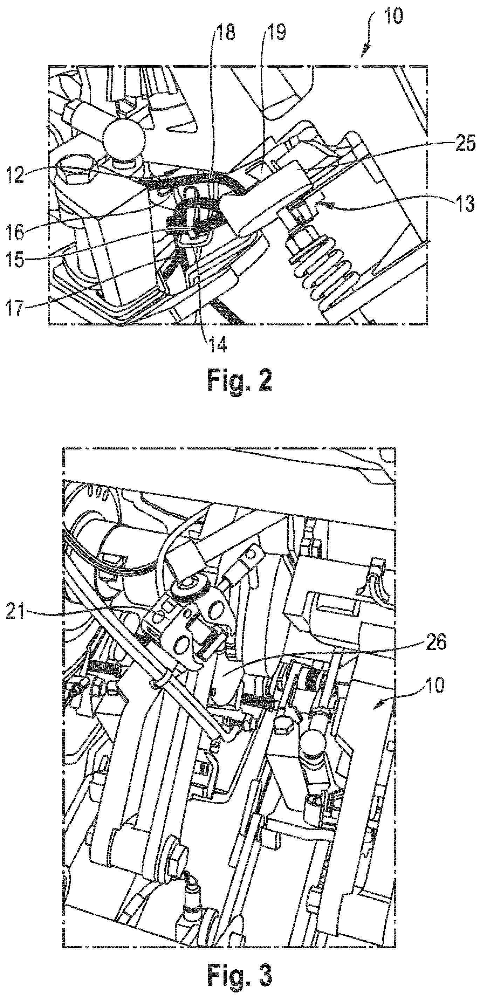

Während des Knotenbildungsprozesses werden verschiedene Schritte durchlaufen. Hier und vorzugsweise zeigt die **Figur 2** einen zweiten Schritt eines Knotenbildungsprozesses mittels einer Knotereinrichtung **10.** Die Knotereinrichtung **10** umfasst einen Knoter **12,** eine Halteeinrichtung **13** sowie eine Antriebsscheibe **26.** Der Knoter **12** umfasst einen Knoterhaken **14,** der wiederum über eine schwenkbewegliche Zunge **15** verfügt, die um eine Schwenkachse **16** verschwenkbar ausgebildet ist. Der Knoter **12** dient dazu, zwei Bindegarnstränge **17, 18** eines jeweiligen Bindegarns miteinander zu verknoten. Hierzu wird der Knoterhaken **14** in dem gezeigten Beispiel um eine hier nicht dargestellte Längsachse angetrieben, sodass sich der Knoterhaken **14** rotatorisch bewegt. Die Steuerung, zu welcher Zeit bzw. über welchen Zeitraum der Knoter **12** angetrieben werden soll, erfolgt mittels der Antriebsscheibe **26.**

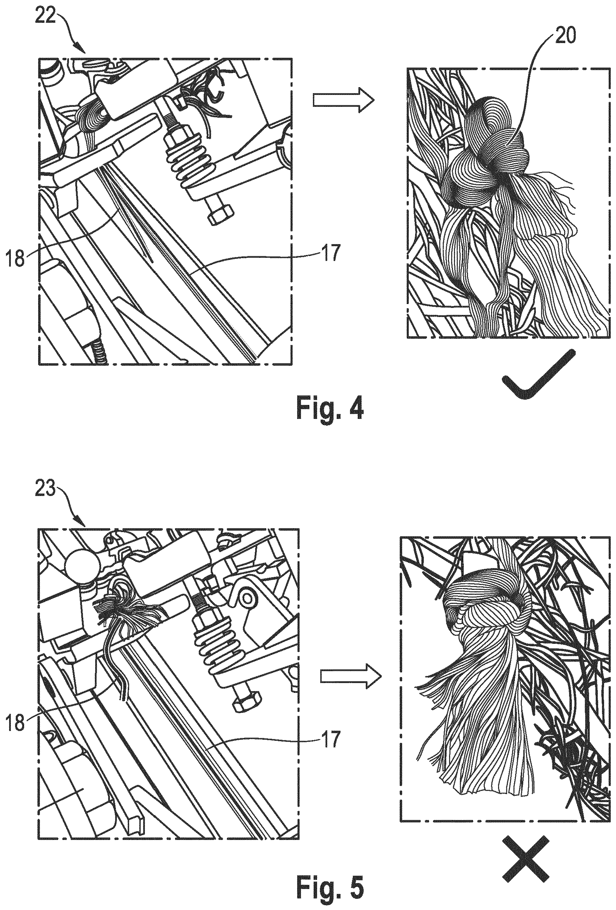

Ebenfalls wird die Halteeinrichtung **13** über die Antriebsscheibe **26** angetrieben und ist zyklisch betreibbar. Die Halteeinrichtung **13** weist ein Halteelement **25** auf, welches dazu eingerichtet ist, das Bindegarn temporär festzuhalten, sodass mittels des Knoters **12** ein jeweiliger Knoten **20, beispielsweise** gemäß Figur 4, gebildet werden kann. Ferner umfasst die Halteeinrichtung **13** ein Schneidelement **19,** mittels dessen das Bindegarn abschneidbar bzw. durchtrennbar ist.

In einem ersten hier nicht dargestellten Schritt befindet sich die Zunge **15** des Knoters **12** in einem Schließzustand der Zunge **15** bei dem der Bindegarnstrang **17** des Bindegarns mittels der Halteeinrichtung **13** gehalten und derart auf dem Knoterhaken**14** abgelegt ist, dass der Bindegarnstrang **17** auf der Zunge **15** aufliegt. Weiterhin ist bereits der zweite Bindegarnstrang **18** des Bindegarns mittels der Bindenadel **11** der Knotereinrichtung **10** zugeführt worden, wobei nunmehr beide Bindegarnstränge **17, 18** des Bindegarns auf der Zunge **15** des Knoterhakens **10** aufliegen.

Im weiteren Verlauf der Knotenbildung werden die beiden Bindegarnstränge **17, 18** des Bindegarns mittels des Knoterhakens **14** "aufgewickelt" und die Zunge **15** um ihre Schwenkachse **16** verschwenkt und hierdurch in eine Offenstellung überführt. Dieser Zustand ist in der **Figur 2** erkennbar. Hierdurch werden erste Teilabschnitte des Bindegarns, die auf der Zunge **15** aufliegen, angehoben, wobei infolge der Drehung des Knoterhakens **14** zweite Teilabschnitte des Bindegarns unterhalb der Zunge **15** auf dem Knoterhaken **14** abgelegt werden. Die Zunge **15** schnappt daraufhin zu, sodass sie schließlich wieder in ihrer Schließstellung vorliegt. Die Zunge **15** fasst in diesem Moment die zweiten Teilabschnitte des Bindegarns und kann auf diese eine Zugkraft ausüben. Bevor der Knoten fertig gestellt wird, wird der Bindegarnstrang **17** des mittels der Bindenadel **11** angereichten Bindegarns fixiert und zum anderen mittels des Schneidelements **19** abgeschnitten. Das freie Ende des Bindegarns, das auf diese Weise gebildet wird, ist dem in seiner Bildung befindlichen Knoten **20** zugeordnet, während der Bindegarnstrang des Bindegarns, der einer in den Figuren nicht dargestellten Vorratsrolle zugeordnet ist, mittels des Halteelements **26** gehalten ist.

Bei der Knotenbildung werden die unterhalb der Zunge **15** angeordneten Teilabschnitte durch die oberhalb der Zunge **15** angeordneten Teilabschnitte gezogen und zu einem Knoten **20** geformt. Dies erfolgt infolge einer weitergehenden Bildung des jeweiligen Quaderballens, wodurch eine Zugkraft auf das Bindegarn ausgeübt wird, mittels der das Bindegarn unter Bildung des gewünschten Knotens aus dem Knoterhaken **14** herausgezogen wird.

Anschließend wird der Knoten **20** von dem Knoter **12** gezogen, während ein Teilabschnitt des Bindegarns von der Halteeinrichtung **13** weiterhin für die nächste Knotenbildung gehalten wird. Diese Vorgehensweise ist im Stand der Technik bekannt.

Die **Figur 3** zeigt eine erfindungsgemäße Sensoreinrichtung **21** mittels der Bilddaten des zuvor beschriebene Knotenbildungsprozess erzeugt werden. Die Sensoreinrichtung **21** wird in diesem Ausführungsbeispiel von einer Bildkamera gebildet. Die Sensoreinrichtung **21** ist optimalerweise derart an der Knotereinrichtung **10** positioniert, dass diese den Knotenbildungsprozess optimal überwachen kann. Das heißt beispielsweise, dass die Bildkamera zumindest teilweise einen guten Blick auf die Knotenbildung hat. In vorliegenden Ausführungsbeispiel ist die Sensoreinrichtung derart positioniert, dass sie Bilddaten erzeugen kann, die in der **Figur 2** dargestellt ist.

Die Sensoreinrichtung **21** erzeugt während des Knotenbildungsprozesses einen Ist-Zustand des Knotenbildungsprozesses. Es hat sich herausgestellt, dass die Aufnahme einer Bilddatei mit der Bildkamera von dem Ist-Zustand gemäß der **Figur 2** besonders geeignet ist, um festzustellen, ob der Knotenbildungsprozess wie gewünscht abläuft oder fehlerhaft ist.

Die Auswertung der erzeugten Bilddateien erfolgt mittels einer Verarbeitungseinrichtung **24** in einer Analyseroutine unter Anwendung eines Algorithmus, wobei die Qualität des Knotens in diesem Ausführungsbeispiel anhand der Lage der Bindegarnstränge im Knoterhaken bestimmt wird.

Hierzu vergleicht die Verarbeitungseinrichtung **24** mit einer künstlichen Intelligenz den Ist-Zustand mit einem in der Verarbeitungseinrichtung **24** gespeicherten Soll-Zustand. Entspricht der Ist-Zustand nicht dem Soll-Zustand kann die Verarbeitungseinrichtung **24** selbst Einstellungsänderungen an der Knotereinrichtung **10** vornehmen, sodass die Knotenbildung weiter optimiert wird. Bei diesem gezeigten Ausführungsbeispiel informiert die Verarbeitungseinrichtung **24** einen Bediener der Quaderballenpresse **1** über die Änderungen.

Die **Figuren 4 und 5** zeigen jeweils einen von der Sensoreinrichtung **21** erfassten Ist-Zustand. Die Verarbeitungseinrichtung **24** vergleicht diesen Ist-Zustand **22** nunmehr mit dem Soll-Zustand und stellt fest, dass der in der **Figur 4** dargestellte Ist-Zustand **22** einen korrekten Verlauf der beiden Bindegarnstränge **17, 18** zeigt und somit zu einer korrekten Knotenbildung führt, wohingegen der in der **Figur 5** dargestellte Ist-Zustand **23** einen fehlerhaften Bindegarnverlauf beziehungsweise eine fehlerhafte Lage des Bindegarns **18** zeigt, bei dem der untere Bindegarnstrang **18** des Bindegarns zu locker ist. Würde der Knotenbildungsprozess nun weitergeführt werden, käme als Ergebnis der fehlerhaft gebildete Knoten gemäß **Figur 5** heraus. Mittels der erfindungsgemäßen Quaderballenpresse **1** kann dies jedoch unterbunden werden, in dem die Verarbeitungseinrichtung den Knotenbildungsprozess stoppt, bevor die unterhalb der Zunge **15** angeordneten Teilabschnitte des Bindegarns, durch die oberhalb der Zunge **15** angeordneten Teilabschnitte des Bindegarns gezogen werden. Das Bindegarn kann entsprechend mit anderen Einstellungen noch einmal neu positioniert, ein neuer Ist-Zustand überprüft und bei korrekter Lage ein qualitativ hochwertiger Knoten gebildet werden.

Selbstverständlich ist es denkbar, dass auch andere landwirtschaftliche Quaderballenpressen mit anders aufgebauten und hier nicht dargestellten Knotereinrichtungen mit einer Sensoreinrichtung zur Erzeugung von Bilddaten von dem Knotenbildungsprozess, bevor der Knoten gebildet wird, und einer Verarbeitungseinrichtung zur Bestimmung der Qualität der jeweiligen Knoten ausgestattet sein können.

### Bezugszeichenliste

- 1: Quaderballenpresse
- 2: Erntegut
- 3: Pick-up
- 4: Schneidrotor
- 5: Vorkanal
- 6: Raffers
- 7: Presskanal
- 8: Verdichterkolben
- 9: Quaderballen
- 10: Knotereinrichtung
- 11: Bindenadel
- 12: Knoter
- 13: Halteeinrichtung
- 14: Knoterhaken
- 15: Zunge
- 16: Schwenkachse
- 17: Bindegarnstrang
- 18: Bindegarnstrang
- 19: Schneidelement
- 20: Knoten
- 21: Sensoreinrichtung
- 22: Ist-Zustand
- 23: Ist-Zustand
- 24: Verarbeitungseinrichtung
- 25: Halteelement
- 26: Antriebsscheibe

## Patentansprüche

1. Landwirtschaftliche Quaderballenpresse (1) zur Verarbeitung von Erntegut zu quaderförmigen Ballen, umfassend zumindest eine Knotereinrichtung, wobei die Knotereinrichtung zumindest nachfolgendes umfasst:
- zumindest einen Knoter (12) zur Verknotung zweier Bindegarnstränge (17, 18) eines Bindegarns zu einem Knoten (20),
- zumindest eine Halteeinrichtung (13) zur Halterung des Bindegarns während eines Knotenbildungsprozesses,
wobei der Knoter (12) einen Knoterhaken (14) umfasst,
**gekennzeichnet durch**
eine Sensoreinrichtung (21) zur Erzeugung von Bilddaten, die die Bindegarnstränge (17, 18) des Bindegarns im Knoterhaken (14) zu einem Zeitpunkt während des Knotenbildungsprozesses, bevor der Knoten (20) gebildet ist, abbilden, sowie
durch eine Verarbeitungseinrichtung (24), die dazu vorgesehen und eingerichtet ist, die Bilddaten mittels einer Analyseroutine unter Anwendung eines Algorithmus dahingehend auszuwerten, dass die Qualität des Knotens (20) bestimmt wird.

2. Quaderballenpresse (1) nach Anspruch 1, **dadurch gekennzeichnet, dass** die von der Sensoreinrichtung (21) erzeugten Bilddaten
- eine Lage der Bindegarnstränge (17, 18) im Knoterhaken (14) und/oder
- eine Dicke der Bindegarnstränge (17, 18) und/oder
- eine Farbe der Bindegarnstränge (17, 18) und/oder
- eine Drehung der Bindegarnstränge (17, 18) des Bindegarns im Knoterhaken (14)
zu einem Zeitpunkt während des Knotenbildungsprozesses, bevor der Knoten gebildet ist, abbilden.

3. Quaderballenpresse (1) nach zumindest einem der vorhergehenden Ansprüche, **dadurch gekennzeichnet, dass** der zumindest einen Knotereinrichtung (10) die zumindest eine Sensoreinrichtung (21) zugeordnet ist, wobei vorzugsweise die Quaderballenpresse (1) eine Mehrzahl von Knotereinrichtungen (10) umfasst und mindestens zwei der Knotereinrichtungen (10), vorzugsweise jeder Knotereinrichtung (10), jeweils eine Sensoreinrichtung (21) zugeordnet ist.

4. Quaderballenpresse (1) nach zumindest einem der vorhergehenden Ansprüche, **dadurch gekennzeichnet, dass** die mindestens eine Sensoreinrichtung (21) von einer Bildkamera gebildet ist.

5. Quaderballenpresse (1) nach zumindest einem der vorhergehenden Ansprüche, **dadurch gekennzeichnet, dass** die Verarbeitungseinrichtung (24) derart eingerichtet ist, dass die Analyseroutine zur Auswertung der Bilddaten künstliche Intelligenz anwendet.

6. Verfahren zum Betrieb einer landwirtschaftlichen Quaderballenpresse (1) zur Verarbeitung von Erntegut zu quaderförmigen Ballen, die Quaderballenpresse (1) umfassend zumindest eine Knotereinrichtung (10), wobei die Knotereinrichtung nachfolgendes umfasst: einen Knoter (12) zur Verknotung zweier Bindegarnstränge (17, 18) eines Bindegarns zu einem Knoten (20), zumindest eine Halteeinrichtung (13) zur Halterung des Bindegarns während eines Knotenbildungsprozesses, wobei der Knoter (12) einen Knoterhaken (14) umfasst, wobei die Quaderballenpresse (1) eine Sensoreinrichtung (21) zur Erzeugung von Bilddaten, die die Bindegarnstränge (17, 18) des Bindegarns im Knoterhaken (14) zu einem Zeitpunkt während des Knotenbildungsprozesses, bevor der Knoten gebildet ist, abbilden, umfasst,
**gekennzeichnet durch** die folgenden Verfahrensschritte:
a) Mittels der Sensoreinrichtung (21) werden Bilddaten erzeugt, welche die Bindegarnstränge (17, 18) des Bindegarns im Knoterhaken (14) zu einem Zeitpunkt während des Knotenbildungsprozesses, bevor der Knoten (20) gebildet wird, abbilden;
b) Die Bilddaten werden mittels einer Verarbeitungseinrichtung (24) in einer Analyseroutine unter Anwendung eines Algorithmus dahingehend ausgewertet, dass die Qualität des Knotens (20) bestimmt wird.

7. Verfahren nach Anspruch 6, **dadurch gekennzeichnet, dass** mittels der Sensoreinrichtung (21) Bilddaten erzeugt werden, welche
- eine Lage, der Bindegarnstränge (17 ,18) im Knoterhaken (14) und/oder
- eine Dicke der Bindegarnstränge (17, 18) und/oder
- eine Farbe der Bindegarnstränge (17, 18) und/oder
- eine Drehung der Bindegarnstränge (17, 18) des Bindegarns im Knoterhaken (14)
während des Knotenbildungsprozesses, bevor der Knoten (20) gebildet ist, abgebildet werden.

8. Verfahren nach Anspruch 6 oder 7, **dadurch gekennzeichnet, dass** die landwirtschaftliche Quaderballenpresse (1) zumindest eine um eine Drehachse drehantreibbare Antriebsscheibe (26) zum zyklischen Antrieb sowohl des Knoters (12) als auch der Halteeinrichtung (13) umfasst, und der Knoter (12) einen Knoterhaken (14) mit einer schwenkbeweglichen Zunge (15) umfasst, und die Halteinrichtung (13) ein Halteelement (25) und ein Schneidelement (19) umfasst,
mit den folgenden Verfahrensschritte:
a) Mittels einer Bindenadel (11) wird ein erster Bindegarnstrang (18) des Bindegarns zu der Halteeinrichtung (13) geführt, mittels der bereits ein zweiter Bindegarnstrang (17) desselben Bindegarns gehalten ist, wobei die beiden Bindegarnabschnitte (17, 18) des Bindegarns derart positioniert sind, dass sie mittels des Knoterhakens (14) verarbeitbar sind;
b) Der Knoter (12) wird mittels der Antriebsscheibe (26) drehangetrieben, wobei der Knoterhaken (14) des Knoters (12) während eines Drehzyklus eine Drehung um mindestens 360° ausführt;
c) Im Zuge des Drehzyklus wird die Zunge (15) des Knoterhakens (14) von einer Schließstellung in eine Offenstellung und zurück in die Schließstellung überführt, wodurch die beiden Bindegarnstränge (17, 18) des Bindegarns derart übereinander geführt werden, dass erste Teilabschnitte des Bindegarns auf der Zunge (15) und zweite Teilabschnitte des Bindegarns unter der Zunge (15) liegen;
d) Die Halteeinrichtung (13) wird mittels der Antriebsscheibe (26) drehangetrieben, wobei der mittels der Bindenadel (11) angereichte erste Bindegarnstrang (18) des Bindegarns mittels der Halteeinrichtung (13) gehalten ist und mittels des Schneidelements (19) durchgeschnitten wird, sodass ein neues Ende des Bindegarns gebildet wird, das mittels des Halteelements (25) der Halteeinrichtung (13) gehalten ist;
e) die Bilddaten dann erzeugt werden, wenn die ersten Teilabschnitte des Bindegarns auf der Zunge (15) und die zweiten Teilabschnitte des Bindegarns unter der Zunge (15) liegen bevor der Knoten (20) gebildet wird.

9. Verfahren nach 6 oder 7, **dadurch gekennzeichnet, dass** die landwirtschaftliche Quaderballenpresse (1) zumindest eine um eine Drehachse drehantreibbare Antriebsscheibe (26) zum zyklischen Antrieb sowohl des Knoters (12) als auch der Halteeinrichtung (13) umfasst, und der Knoter (12) einen Knoterhaken (14) mit einer schwenkbeweglichen Zunge (15) umfasst, und die Halteinrichtung (13) ein Halteelement (25) und ein Schneidelement (19) umfasst,
mit den folgenden Verfahrensschritten:
a) Mittels einer Bindenadel (11) wird ein erster Bindegarnstrang (18) des Bindegarns zu der Halteeinrichtung (13) geführt, mittels der bereits ein zweiter Bindegarnstrang (17) desselben Bindegarns gehalten ist, wobei die beiden Bindegarnabschnitte (17, 18) des Bindegarns derart positioniert sind, dass sie mittels des Knoterhakens (14) verarbeitbar sind;
b) Der Knoter (12) wird mittels der Antriebsscheibe (26) drehangetrieben, wobei der Knoterhaken (14) des Knoters (12) während eines Drehzyklus eine Drehung um mindestens 360° ausführt;
c) Im Zuge des Drehzyklus wird die Zunge (15) des Knoterhakens (14) von einer Schließstellung in eine Offenstellung und zurück in die Schließstellung überführt, wodurch die beiden Bindegarnstränge (17, 18) des Bindegarns derart übereinander geführt werden, dass erste Teilabschnitte des Bindegarns auf der Zunge (15) und zweite Teilabschnitte des Bindegarns unter der Zunge (15) liegen;
d) Die Halteeinrichtung (13) wird mittels der Antriebsscheibe (26) drehangetrieben, wobei der mittels der Bindenadel (11) angereichte erste Bindegarnstrang (18) des Bindegarns mittels der Halteeinrichtung (13) gehalten ist und mittels des Schneidelements (19) durchgeschnitten wird, sodass ein neues Ende des Bindegarns gebildet wird, das mittels des Halteelements (25) der Halteeinrichtung (13) gehalten ist;
e) Bei der Erzeugung der Bilddaten wird eine Sequenz an Bildern während des Knotenbildungsprozesses vor der Knotenbildung erzeugt, wobei die Sequenz während des Drehzyklus erzeugt wird, bei dem die Zunge (15) des Knoters (12) von einer Schließstellung in eine Offenstellung und zurück in die Schließstellung überführt wird, wodurch die beiden Abschnitte des Bindegarns derart übereinander geführt werden, dass erste Teilabschnitte des Bindegarns auf der Zunge (15) und zweite Teilabschnitte des Bindegarns unter der Zunge (15) liegen.

10. Verfahren nach zumindest einem der Ansprüche 6 bis 9, **dadurch gekennzeichnet, dass** die Analyseroutine zur Auswertung der Bilddaten künstliche Intelligenz anwendet.

11. Verfahren nach mindestens einem der Ansprüche 6 bis 10, **dadurch gekennzeichnet, dass** die Verarbeitungseinrichtung (24) auf Basis der ausgewerteten Bilddaten Einstellungen an der Knotereinrichtung (10) der Quaderballenpresse (1) vornimmt.
